# EUROPEAN PATENT APPLICATION

(11) **EP 4 831 231 A1**
(43) Date of publication of application: **28.10.2026**
(21) Application number: 24907062.4
(22) Date of filing: 22.11.2024
(51) Int. Cl.: C08L 23/00, C08K 3/22, C08K 3/34, C08L 23/04, H01B 7/02

(54) **RESIN COMPOSITION AND COATED ELECTRIC WIRE**

(30) Priority: 18.12.2023 JP 2023213094
(71) Applicant: Yazaki Corporation, Tokyo 108-0075 (JP)
(72) Inventor: SAITO, Kyosuke, Susono-shi Shizuoka 410-1194 (JP)
(74) Representative: Grünecker Patent- und Rechtsanwälte PartG mbB
(86) International application number: PCT/JP2024/041385
(87) International publication number: WO 2025/134674

(57) **Abstract**

A resin composition contains a polyolefin, a zeolite, an antioxidant, and a metal hydroxide, wherein the resin composition contains the zeolite in an amount of 0.1 parts by mass or more and 3.5 parts by mass or less with respect to 100 parts by mass of the polyolefin, the resin composition contains the antioxidant in an amount of 1 parts by mass or more and 6.5 parts by mass or less with respect to 100 parts by mass of the polyolefin, and a mass ratio of the zeolite with respect to the antioxidant is 0.08 or more and 3 or less.

## Description

### TECHNICAL FIELD

The present invention relates to a resin composition and a coated electric wire.

### BACKGROUND ART

In the related art, it is known to provide a coated electric wire routed in an automobile with a coating layer formed of a resin composition containing a thermoplastic resin. Further, in order to impart flame retardancy suitable for practical use, a flame retardant is appropriately added to the resin composition containing a thermoplastic resin such as a polyolefin.

As a flame retardant having high flame retardancy, a bromine-based flame retardant is known. PTL 1 discloses a resin composition containing a thermoplastic resin, a bromine-based flame retardant, and a zeolite having a pore diameter of 8 Å or less.

On the other hand, as a flame retardant, a non-bromine-based flame retardant such as a metal hydroxide is also known. PTL 2 discloses a non-halogen electric wire in which a conductor is covered with a material containing a resin component and a metal hydroxide.

### CITATION LIST

### PATENT LITERATURE

Patent Literature 1: Japanese Unexamined Patent Application Publication No. 2020-15812

### SUMMARY OF INVENTION

The resin composition described in PTL 1 maintains high flame retardancy and also has good heat resistance. However, among bromine-based flame retardants, there are substances that are regulated by environmental regulations, such as polybrominated biphenyls (PBB) and polybrominated diphenyl ethers (PBDE). Thus, in the future, other bromine-based flame retardants may also be subjected to environmental regulations. When environmental regulations are enacted, use of a resin composition containing a bromine-based flame retardant may be restricted.

Further, in the non-halogen electric wire described in PTL 2, in order to satisfy flame retardancy equivalent to that of a bromine-based flame retardant, it is necessary to fill a large amount of a metal hydroxide. However, such a metal hydroxide may promote oxidative degradation of a resin component. Thus, when a large amount of the metal hydroxide is filled, heat resistance of the resin composition may be reduced.

The present invention has been made in view of such problems in the related art. Further, an object of the present invention is to provide a resin composition and a coated electric wire that are capable of exhibiting excellent flame retardancy and heat resistance and suppressing moisture absorption and bleeding, without using a bromine-based flame retardant having concerns regarding environmental regulations.

A resin composition according to an aspect of the present invention contains a polyolefin, a zeolite, an antioxidant, and a metal hydroxide. The resin composition contains the zeolite in an amount of 0.1 parts by mass or more and 3.5 parts by mass or less with respect to 100 parts by mass of the polyolefin. The resin composition contains the antioxidant in an amount of 1 parts by mass or more and 6.5 parts by mass or less with respect to 100 parts by mass of the polyolefin. A mass ratio of the zeolite with respect to the antioxidant is 0.08 or more and 3 or less.

A coated electric wire according to another aspect of the present invention includes a conductor and a coating layer that covers the conductor and is formed of the above-mentioned resin composition.

According to the present invention, it is possible to provide a resin composition and a coated electric wire that are capable of exhibiting excellent flame retardancy and heat resistance and suppressing moisture absorption and bleeding, without using a bromine-based flame retardant having concerns regarding environmental regulations.

### BRIEF DESCRIPTION OF DRAWINGS

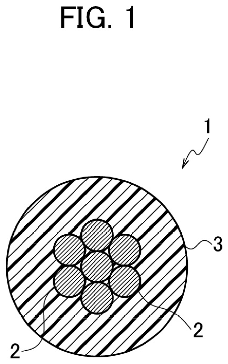

[Fig. 1] Fig. 1 is a cross-sectional view illustrating an example of a coated electric wire according to an embodiment.

### DESCRIPTION OF EMBODIMENTS

With reference to the drawings, a resin composition, a coated electric wire, and a wire harness according to the present embodiment are described below in detail. Note that the dimensional ratios in the drawings are exaggerated for explanatory purposes and may differ from the actual ratios.

### [Resin composition]

A resin composition according to the present embodiment contains a polyolefin, a zeolite, an antioxidant, and a metal hydroxide. Each component is described below in detail.

### (Polyolefin)

The polyolefin is a resin obtained by polymerizing monomers of an olefin or alkene. The polyolefin may be, for example, a polymer obtained by polymerizing monomers containing at least one of ethylene or propylene. Specifically, the polyolefin may contain at least one resin selected from the group consisting of polyethylene, an ethylene copolymer, polypropylene, and the like. Further, the polyolefin may be an olefin-based thermoplastic elastomer (TPO).

The polyethylene may contain at least one selected from the group consisting of high-density polyethylene (HDPE), medium-density polyethylene (MDPE), low-density polyethylene (LDPE), linear low-density polyethylene (LLDPE), very low-density polyethylene (VLDPE), and the like. The polyethylene may be a copolymer containing a small amount of a comonomer. The polyethylene may be a homopolymer of an ethylene monomer, a copolymer of an ethylene monomer and an α-olefin monomer in an amount of 5 mol% or less, or a copolymer of an ethylene monomer and a non-olefin monomer in an amount of 1 mol% or less having only carbon, oxygen, or hydrogen atoms as functional groups.

The ethylene copolymer may be a polymer obtained by polymerizing two or more kinds of monomers. The ethylene copolymer may be a copolymer of an ethylene monomer and an olefin monomer other than the ethylene monomer in an amount of more than 5 mol%, or a copolymer of an ethylene monomer and a non-olefin monomer in an amount of more than 1 mol%. The ethylene copolymer may contain, for example, at least one selected from the group consisting of an ethylene-butene copolymer, an ethylene-octene copolymer, an ethylene-vinyl ester copolymer, ethylene-α,β-unsaturated carboxylic acid, an alkyl ester copolymer of ethylene-α,β-unsaturated carboxylic acid, an ethylene-vinyl acetate copolymer (EVA), an ethylene-methyl methacrylate copolymer (EMMA), an ethylene-methyl acrylate copolymer (EMA), an ethylene-ethyl acrylate copolymer (EEA), an ethylene-butyl acrylate copolymer (EBA), and an ethylene-vinyl acetate-ethyl acrylate copolymer.

The polypropylene may contain propylene as a main component and an α-olefin other than propylene. Note that the term "main component" as used herein indicates that a propylene monomer accounts for 50% or more of all monomers used for polymerizing the polypropylene. The polypropylene may contain at least one of a block copolymer or a random copolymer. The polypropylene may contain at least one selected from the group consisting of a propylene homopolymer, a propylene-ethylene random copolymer, a propylene-α-olefin random copolymer, and a propylene/ethylene-α-olefin random copolymer.

In the resin component contained in the resin composition, a content of the polyolefin may be 90 mass% or more, 95 mass% or more, 99 mass% or more, or 100 mass%.

The polyolefin may be crosslinked. By crosslinking the polyolefin, mechanical properties of the resin composition can be improved. The polyolefin may contain, for example, at least one of polyethylene or an ethylene copolymer. Such a polyolefin has high flexibility, and hence is suitable for a coating layer of an electric wire.

### (Zeolite)

The resin composition contains the zeolite. By adding the zeolite to the resin composition, heat resistance can be improved. The zeolite is a kind of aluminosilicate, and can be represented by a general formula M_{x/n}·[(AlO₂)ₓ·(SiO₂)_{y}]·zH₂O. Note that, in the general formula, M represents a cation having a valence of n, x+y represents the number of tetrahedra per unit cell, z represents the number of moles of water, and y is a value greater than x. Examples of monovalent cation species include Li⁺, Na⁺, and K⁺, and examples of divalent cation species include Ca²⁺, Mg²⁺, and Ba²⁺.

The resin composition contains the zeolite in an amount of 0.1 parts by mass or more and 3.5 parts by mass or less with respect to 100 parts by mass of the polyolefin. When the content of the zeolite is 0.1 parts by mass or more and, heat resistance can be improved. Further, when the content of the zeolite is 3.5 parts by mass or less, moisture absorption by the zeolite can be suppressed. The content of the zeolite may be 0.3 parts by mass or more, 0.5 parts by mass or more, 1 parts by mass or more, 1.5 parts by mass or more, 2 parts by mass or more, 2.5 parts by mass or more, or 3 parts by mass or more. Further, the content of the zeolite may be 3 parts by mass or less, 2.5 parts by mass or less, 2 parts by mass or less, 1.5 parts by mass or less, 1 parts by mass or less, 0.8 parts by mass or less, or 0.5 parts by mass or less.

In general, the zeolite is porous, and has pores. The zeolite can adsorb a molecule smaller than a pore diameter thereof, whereas a molecule larger than the pore diameter cannot enter the pore. Therefore, the zeolite is known to have a molecular sieve effect and an ion exchange function. The pore diameter of the zeolite is derived from a crystal structure of the zeolite. The pore diameter of the zeolite may be, for example, 1 Å or more and 10 Å or less. The pore diameter of the zeolite may be 2 Å or more, 3 Å or more, 4 Å or more, 5 Å or more, 6 Å or more, 7 Å or more, or 8 Å or more. Further, the pore diameter of the zeolite may be 9 Å or less, 8 Å or less, 7 Å or less, 6 Å or less, 5 Å or less, 4 Å or less, or 3 Å or less. The pore diameter of the zeolite can be measured by, for example, the Horvath-Kawazoe method.

A molar ratio of silica with respect to alumina in the zeolite (SiO₂/Al₂O₃ ratio) is not particularly limited. The silica/alumina ratio may be, for example, 1 or more and 10000 or less. The silica/alumina ratio may be 2 or more, 5 or more, 20 or more, 80 or more, 500 or more, or 1000 or more. Further, the silica/alumina ratio may be 2000 or less, 1000 or less, 200 or less, 50 or less, 30 or less, 10 or less, or 4 or less.

The pore diameter of the zeolite may be 6.5 Å or less, or the pore diameter of the zeolite may be 6.6 Å or more and 9.0 Å or less and a molar ratio of silica with respect to alumina in the zeolite may be 10 or less. The resin composition containing such a zeolite is excellent particularly in heat resistance.

The zeolite includes a natural zeolite, a synthetic zeolite, and an artificial zeolite. The natural zeolite is produced in nature, and is often inexpensive. The synthetic zeolite uses high-purity chemical substances as raw materials, and has high purity. The artificial zeolite uses unused resources typified by coal ash as raw materials, and has higher purity than the natural zeolite and is less expensive than the synthetic zeolite. Among those, the zeolite is preferably at least one of the synthetic zeolite or the artificial zeolite. Those zeolites have a more uniform structure than the natural zeolite.

A structure of the zeolite is not particularly limited, and may be, for example, an A-type, a beta-type, MCM-22, ZSM-5, ferrierite, or mordenite.

An average particle diameter of the zeolite is not particularly limited, and may be 0.1 µm or more, 1 µm or more, or 5 µm or more. Further, the average particle diameter of the zeolite may be 50 µm or less, 30 µm or less, or 20 µm or less. The average particle diameter of the zeolite is a value calculated as an average value of particle diameters of particles observed in several to several tens of visual fields by observing a cross section of the resin composition using observation means such as a scanning electron microscope (SEM) or a transmission electron microscope (TEM).

A cation species of the zeolite is not particularly limited, and may be, for example, at least one selected from the group consisting of a hydrogen ion (H⁺), a potassium ion (K⁺), a calcium ion (Ca²⁺), and an ammonium ion (NH₄⁺).

### (Antioxidant)

The antioxidant suppresses oxidative degradation and the like of the polyolefin. Examples of the antioxidant include known antioxidants used for a polyolefin, such as radical chain inhibitors including a phenolic antioxidant and an amine antioxidant, peroxide decomposers including a phosphorus-based antioxidant and a sulfur-based antioxidant, and metal deactivators including a hydrazine-based antioxidant and an amine-based antioxidant. The antioxidant may be used alone or in a combination of a plurality of kinds.

The resin composition contains the antioxidant in an amount of 1 parts by mass or more and 6.5 parts by mass or less with respect to 100 parts by mass of the polyolefin. When the content of the antioxidant is 1 part by mass or more, oxidative degradation of the polyolefin and the like can be suppressed. Further, when the content of the antioxidant is 6.5 parts by mass or less, bleeding-out can be suppressed. Further, when the content of the antioxidant is 6.5 parts by mass or less, it is possible to suppress a decrease in a degree of crosslinking of the resin composition caused by a reaction of the antioxidant during a crosslinking treatment, and degradation of smoke generation characteristics when an electric wire is energized. In the present embodiment, heat resistance is improved by addition of the zeolite, and hence it is expected that the antioxidant can exhibit its effect in a smaller amount as compared with a case where the antioxidant is used alone. Further, the content of the antioxidant may be 6 parts by mass or less, 4 parts by mass or less, or 2 parts by mass or less.

A mass ratio of the zeolite with respect to the antioxidant (the zeolite/the antioxidant) is 0.08 or more and 3 or less. When the mass ratio of the zeolite with respect to the antioxidant falls within the above-mentioned range, heat resistance can be improved. The above-mentioned mass ratio may be 0.1 or more, or 0.3 or more. Further, the above-mentioned mass ratio may be 2 or less, 1 or less, or 0.7 or less.

### (Metal hydroxide)

The metal hydroxide functions as a flame retardant. The metal hydroxide is less likely to be subjected to environmental regulations as compared with a bromine-based flame retardant. Thus, in the resin composition according to the present embodiment, the metal hydroxide is used as a flame retardant of the resin composition.

The metal hydroxide may include at least one of a salt of a metal ion and a hydroxide ion, or a hydrate of a metal oxide. The metal hydroxide may include, for example, at least one selected from the group consisting of magnesium hydroxide (Mg(OH)₂), aluminum hydroxide (Al(OH)₃), calcium hydroxide (Ca(OH)₂), basic magnesium carbonate (mMgCO₃·Mg(OH)₂·nH₂O), hydrated aluminum silicate (aluminum silicate hydrate, Al₂O₃·3SiO₂·nH₂O), and hydrated magnesium silicate (magnesium silicate pentahydrate, Mg₂Si₃O₈·5H₂O). Specifically, the metal hydroxide may include magnesium hydroxide.

Those metal hydroxides are preferably subjected to a surface treatment in consideration of compatibility with a resin material. However, the metal hydroxides can be used even without being subjected to a surface treatment as long as physical properties are not deteriorated. The surface treatment for the metal hydroxide is preferably performed using a silane coupling agent, a titanate coupling agent, a fatty acid such as stearic acid, or a metal salt of a fatty acid such as calcium stearate.

The resin composition may contain the metal hydroxide in an amount of 40 parts by mass or more and 130 parts by mass or less with respect to 100 parts by mass of the polyolefin. As described above, in the resin composition according to the present embodiment, the blending ratio of the zeolite and the antioxidant is optimized, and hence the content of the metal hydroxide can fall within the range described above. Further, when the content of the metal hydroxide is 40 parts by mass or more, flame retardancy can further be improved. Further, when the content of the metal hydroxide is 130 parts by mass or less, a hardness of the resin composition can be increased, and hence wear resistance can be improved. The content of the metal hydroxide may be 50 parts by mass or more, or 60 parts by mass or more. Further, the content of the metal hydroxide may be 120 parts by mass or less, 110 parts by mass or less, 100 parts by mass or less, 90 parts by mass or less, 80 parts by mass or less, 70 parts by mass or less, or 60 parts by mass or less.

The resin composition may be substantially free of a bromine-based flame retardant. A bromine-based flame retardant is an organic compound having at least one halogen, and can capture hydroxyl radicals to suppress combustion of the resin composition. However, in the future, a bromine-based flame retardant may be subjected to environmental regulations. When environmental regulations are enacted, use of a resin composition containing a bromine-based flame retardant may be restricted. The resin composition according to the present embodiment contains the metal hydroxide, and hence the resin composition has flame retardancy even though the resin composition is substantially free of a bromine-based flame retardant. Note that the expression "the resin composition is substantially free of a bromine-based flame retardant" indicates that the resin composition contains a bromine-based flame retardant in an amount of 1 parts by mass or less with respect to 100 parts by mass of the polyolefin. Note that the resin composition may contain a bromine-based flame retardant in an amount of 0.5 parts by mass or less or 0.1 parts by mass or less with respect to 100 parts by mass of the polyolefin.

The resin composition of the present embodiment may contain various additives in appropriate amounts within a range that does not impair the effects of the present embodiment. Examples of the additives include a crosslinking aid, a flame retardant aid, a metal deactivator, a copper corrosion inhibitor, an aging inhibitor, a lubricant, a filler, a reinforcing agent, an ultraviolet absorber, a stabilizer, a plasticizer, a pigment, a dye, a coloring agent, an antistatic agent, and a foaming agent. Contents of those additives are not particularly limited, and can be appropriately determined depending on purposes.

The resin composition may have a Shore D hardness of less than 45. When the resin composition has a Shore D hardness of less than 45, wear resistance of the resin composition can be improved. Note that a Shore D hardness of the resin composition is 0 or more, and may be 10 or more. The Shore D hardness of the resin composition can be measured in accordance with JIS K 7215:1986.

As described above, the resin composition according to the present embodiment contains the polyolefin, the zeolite, the antioxidant, and the metal hydroxide. The resin composition contains the zeolite in an amount of 0.1 parts by mass or more and 3.5 parts by mass or less with respect to 100 parts by mass of the polyolefin. The resin composition contains the antioxidant in an amount of 1 parts by mass or more and 6.5 parts by mass or less with respect to 100 parts by mass of the polyolefin. The mass ratio of the zeolite with respect to the antioxidant is 0.08 or more and 3 or less.

Therefore, the resin composition according to the present embodiment is capable of exhibiting excellent flame retardancy and heat resistance and suppressing moisture absorption and bleeding, without using a bromine-based flame retardant having concerns regarding environmental regulations.

In the resin composition according to the present embodiment, the blending ratio of the zeolite and the antioxidant falls within the predetermined range, and hence it is considered that a time period for which the antioxidant is consumed during a heat treatment can be prolonged, and as a result, heat resistance is excellent. Further, in the resin composition according to the present embodiment, the blending ratio of the zeolite and the antioxidant falls within the predetermined range, and hence the amounts of the zeolite and the antioxidant to be added can be kept low.

According to the resin composition of the present embodiment, the resin composition can be used even with a flexible conductor and a thin-wall specification in compliance with ISO 19642, and it is also conceivable to achieve cost reduction by filling a large amount of a filler.

### [Coated electric wire]

Next, with reference to Fig. 1, a coated electric wire 1 according to the present embodiment is described. As illustrated in Fig. 1, the coated electric wire 1 according to the present embodiment includes a conductor 2 and a coating layer 3 that covers the conductor 2 and is formed of the above-mentioned resin composition. As described above, the resin composition according to the above-mentioned embodiment is capable of exhibiting excellent flame retardancy and heat resistance and suppressing moisture absorption and bleeding, without using a bromine-based flame retardant having concerns regarding environmental regulations. Thus, the coated electric wire 1 can be used preferably as the coated electric wire 1 for an automobile, for example.

The conductor 2 may be configured by a single element wire, or may be configured by a bundle of a plurality of element wires. A diameter of the conductor 2 and a diameter of each element wire are not particularly limited, and can be appropriately determined depending on applications. The conductor 2 may be made of copper, aluminum, or an alloy containing those metals.

The resin composition forming the coating layer 3 is produced by melt-kneading the resin composition described above, and the method thereof may use known means. For example, the resin composition can be obtained by preliminarily preblending using a high-speed mixing apparatus such as a Henschel mixer, and then kneading using a known kneader such as a Banbury mixer, a kneader, or a roll mill.

A method of covering the conductor 2 with the coating layer 3 may also use known means. For example, the coating layer 3 may be formed by a general extrusion molding method. An extruder used in the extrusion molding method may include, for example, a single-screw extruder or a twin-screw extruder. By extruding a molten resin and covering an outer periphery of the conductor 2 with the molten resin composition, the coating layer 3 that covers the outer periphery of the conductor 2 can be formed.

In this manner, in the coated electric wire 1 of the present embodiment, the coating layer 3 can be formed by extrusion molding in the same manner as a general resin composition for electric wires. Note that, in order to improve strength of the coating layer 3, after forming the coating layer 3 on the outer periphery of the conductor 2, radiation may be irradiated onto the resin composition to crosslink the resin composition. As a result, strength of the coating layer 3 can be improved.

As the radiation, for example, a γ-ray or an electron beam may be used as a radiation source. By irradiating the resin composition in the coating layer 3, radicals are generated in molecules, and those radicals are coupled with each other to form intermolecular crosslinking bonds. As a result, strength of the coating layer 3 can be improved. Note that a crosslinking agent activated by radiation may be further blended to the coating layer 3 to further improve strength of the coating layer 3.

Note that, regarding a processing method of the resin composition, a kneading method of the resin composition, a method of covering the conductor 2, and a crosslinking method of the resin composition are not particularly limited, and an optimal process can be selected according to purposes.

As described above, the coated electric wire 1 according to the present embodiment includes the conductor 2 and the coating layer 3 that covers the conductor 2 and is formed of the resin composition described above. The resin composition is capable of exhibiting excellent flame retardancy and heat resistance and suppressing moisture absorption and bleeding, without using a bromine-based flame retardant having concerns regarding environmental regulations. Thus, the coated electric wire 1 can be used preferably as the coated electric wire 1 for an automobile, for example. Further, the resin composition contains the polyolefin, and hence the coated electric wire 1 can be provided at a lower cost than a silicone rubber electric wire.

### [Wire Harness]

Next, a wire harness according to the present embodiment is described. The wire harness according to the present embodiment includes the coated electric wire 1 described above. The coating layer 3 of the coated electric wire 1 is formed of the resin composition, and the resin composition is capable of exhibiting excellent flame retardancy and heat resistance and suppressing moisture absorption and bleeding, without using a bromine-based flame retardant having concerns regarding environmental regulations. Thus, the wire harness according to the present embodiment can be used preferably as a wire harness routed in a vehicle such as an electric automobile.

### [Examples]

The resin composition according to the present embodiment is described below in more detail by Examples and Comparative Examples. However, the resin composition according to the present embodiment is not limited to those examples.

The following materials were melt-kneaded using a resin mixer (manufactured by Toyo Seiki Seisaku-sho, Ltd.) at blending amounts (parts by mass) shown in Tables to prepare a resin composition of each example. The resin composition was crosslinked under a condition of 750 kV × 160 kGy.

### [Polyolefin]

ENGAGE (registered trademark) 7256 (produced by Dow Inc.), an ethylene-butene copolymer, a polyolefin elastomer

### [Zeolite]

(1) A-type zeolite, pore diameter: 3 Å, SiO₂/Al₂O₃ = 2, cation species: K⁺, ZEORAM (registered trademark) A-3 (product model number) (produced by Tosoh Corporation)
(2) A-type zeolite, pore diameter: 4 Å, SiO₂/Al₂O₃ = 2, cation species: Na⁺, ZEORAM (registered trademark) A-4 (product model number) (produced by Tosoh Corporation)
(3) A-type zeolite, pore diameter: 5 Å, SiO₂/Al₂O₃ = 2, cation species: Ca²⁺, ZEORAM (registered trademark) A-5 (product model number) (produced by Tosoh Corporation)
(4) ZSM-5-type zeolite, pore diameter: 5.8 Å, SiO₂/Al₂O₃ = 40, cation species: H⁺, HSZ (registered trademark) 840HOA (product model number) (produced by Tosoh Corporation)
(5) ZSM-5-type zeolite, pore diameter: 5.8 Å, SiO₂/Al₂O₃ = 1500, cation species: H⁺, HSZ (registered trademark) 891HOA (product model number) (produced by Tosoh Corporation)
(6) Beta-type zeolite, pore diameter: 6.5 Å, SiO₂/Al₂O₃ = 40, cation species: H⁺, HSZ (registered trademark) 940HOA (product model number) (produced by Tosoh Corporation)
(7) Y-type zeolite, pore diameter: 9.0 Å, SiO₂/Al₂O₃ = 5.5, cation species: H⁺, HSZ (registered trademark) 320HOA (product model number) (produced by Tosoh Corporation)
(8) Y-type zeolite, pore diameter: 9.0 Å, SiO₂/Al₂O₃ = 100, cation species: H⁺, HSZ (registered trademark) 385HUA (product model number) (produced by Tosoh Corporation)

### [Antioxidant]

Irganox (registered trademark) 1010 (produced by BASF), pentaerythritol tetrakis[3-(3,5-di(tert-butyl)-4-hydroxyphenyl)propionate]

### [Metal hydroxide]

Magnesium hydroxide KISUMA (registered trademark) 5A (produced by Kyowa Chemical Industry Co., Ltd.), surface-treated with a higher fatty acid

### [Evaluation]

Flame retardancy, heat resistance, moisture absorption, bleeding, and hardness of the resin composition prepared as described above were evaluated as follows.

### (Flame Retardancy)

An oxygen index of the resin composition having a thickness of 3 mm and subjected to a crosslinking treatment was measured in accordance with JIS K 7201-2, and the measured oxygen index was used for evaluation of flame retardancy. When the oxygen index was 21.0 or more, flame retardancy was evaluated as good. When the oxygen index was less than 21.0, flame retardancy was evaluated as poor.

### (Heat Resistance)

The crosslinked resin composition was molded into a resin sheet having a thickness of 1 mm, and then was punched out into a No. 3 dumbbell shape specified in JIS K 6251:2010. The punched dumbbell-shaped sheet was heated at 170 degrees Celsius for 150 hours in accordance with JIS K 7212:1999. The heated sheet was taken out of an oven, and was left at a room temperature (approximately 23 degrees Celsius) for 12 hours. Then, using the sheet cooled to a room temperature as a test sample, a tensile test was performed at a room temperature (23 degrees Celsius) at a tensile speed of 200 mm/min. Further, when an elongation of the test sample was 100% or more, heat resistance was evaluated as good. When the elongation of the test sample was less than 100%, heat resistance was evaluated as poor.

### (Moisture Absorption)

Pellets were prepared from the crosslinked resin composition, and the pellets were vacuum-degassed at 40 degrees Celsius using a vacuum dryer. Thereafter, the pellets were left under conditions of a room temperature (23 degrees Celsius) and a humidity of 40% to 60% for 168 hours. A moisture content of the test sample was measured by Method A (anhydrous methanol extraction method) specified in JIS K 7251:2002. When the moisture content was less than 1,500 ppm, moisture absorption was evaluated as good. When the moisture content was 1,500 ppm or more, moisture absorption was evaluated as poor.

### (Bleeding)

The resin composition was molded into a resin sheet having a thickness of 0.5 mm and a width of 50 mm, and was cut to a length of 200 mm. The resin sheet was subjected to a crosslinking treatment, and bleeding substances on the resin sheet were wiped off using acetone. Thereafter, the resin sheet was left under conditions of a room temperature (23 degrees Celsius) and a humidity of 40% to 60% for 1,000 hours. Then, bleeding substances on the resin sheet were wiped off again using acetone. A difference in weight between a sample weight before the first wiping and a sample weight after the second wiping was determined as an amount of bleeding substances bled out onto the surface of the resin sheet. The bleeding amount was converted into a mass per unit area based on a length and a width of the resin sheet. When the bleeding amount was less than 0.150 mg/cm², bleeding was evaluated as good. When the bleeding amount was 0.150 mg/cm² or more, bleeding was evaluated as poor.

### (Hardness)

The crosslinked resin composition was molded into a resin sheet having a thickness of 2 mm, and test samples were prepared by punching out the resin sheet into a size specified in JIS K 7215:1986. Then, three or more punched test samples were stacked so that a total thickness became 6 mm or more. A Shore D hardness of the sample was measured using a Type D durometer. When the Shore D hardness was less than 45, hardness was evaluated as good. When the Shore D hardness was 45 or more, hardness was evaluated as poor.

**[Table 1]**

| | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| Polyolefin | ENGAGE 7256 | 100 | 100 | 100 | 100 | 100 | 100 | 100 | 100 | 100 | 100 |
| A-type zeolite | 3 Å (SiO₂/Al₂O₃=2) | - | - | - | - | - | - | - | - | - | - |
| A-type zeolite | 4 Å (SiO₂/Al₂O₃=2) | - | - | - | - | - | - | - | - | - | - |
| A-type zeolite | 5 Å (SiO₂/Al₂O₃=2) | 0.5 | 1 | 2 | 3 | 0.5 | 0.5 | 0.5 | 0.5 | 0.5 | 0.5 |
| ZSM-5-type zeolite | 5.8 Å (SiO₂/Al₂O₃=40) | - | - | - | - | - | - | - | - | - | - |
| ZSM-5-type zeolite | 5.8 Å (SiO₂/Al₂O₃=1500) | - | - | - | - | - | - | - | - | - | - |
| Beta-type zeolite | 6.5 Å (SiO₂/Al₂O₃=40) | - | - | - | - | - | - | - | - | - | - |
| Y-type zeolite | 9.0 Å (SiO₂/Al₂O₃=5.5) | - | - | - | - | - | - | - | - | - | - |
| Y-type zeolite | 9.0 Å (SiO₂/Al₂O₃=100) | - | - | - | - | - | - | - | - | - | - |
| Antioxidant | Irganox 1010 | 1 | 1 | 1 | 1 | 1 | 1 | 1 | 2 | 4 | 6 |
| Magnesium hydroxide | KISUMA 5A | 60 | 60 | 60 | 60 | 80 | 100 | 120 | 60 | 60 | 60 |
| Zeolite/Antioxidant | | 0.5 | 1 | 2 | 3 | 0.5 | 0.5 | 0.5 | 0.25 | 0.13 | 0.08 |
| Flame retardancy | | Good | Good | Good | Good | Good | Good | Good | Good | Good | Good |
| Heat resistance | | Good | Good | Good | Good | Good | Good | Good | Good | Good | Good |
| Moisture absorption | | Good | Good | Good | Good | Good | Good | Good | Good | Good | Good |
| Bleeding | | Good | Good | Good | Good | Good | Good | Good | Good | Good | Good |
| Hardness | | Good | Good | Good | Good | Good | Good | Good | Good | Good | Good |

**[Table 2]**

| | | Example 11 | Example 12 | Example 13 | Example 14 | Example 15 | Example 16 | Example 17 | Example 18 | Example 19 |
|---|---|---|---|---|---|---|---|---|---|---|
| Polyolefin | ENGAGE 7256 | 100 | 100 | 100 | 100 | 100 | 100 | 100 | 100 | 100 |
| A-type zeolite | 3 Å (SiO₂/Al₂O₃=2) | 0.5 | - | - | - | - | - | - | - | - |
| A-type zeolite | 4 Å (SiO₂/Al₂O₃=2) | - | 0.5 | - | - | - | - | - | - | - |
| A-type zeolite | 5 Å (SiO₂/Al₂O₃=2) | - | - | - | - | - | - | - | - | 0.5 |
| ZSM-5-type zeolite | 5.8 Å (SiO₂/Al₂O₃=40) | - | - | 0.5 | - | - | - | - | - | - |
| ZSM-5-type zeolite | 5.8 Å (SiO₂/Al₂O₃=1500) | - | - | - | 0.5 | - | - | 0.5 | 0.5 | - |
| Beta-type zeolite | 6.5 Å (SiO₂/Al₂O₃=40) | - | - | - | - | 0.5 | - | - | - | - |
| Y-type zeolite | 9.0 Å (SiO₂/Al₂O₃=5.5) | - | - | - | - | - | 0.5 | - | - | - |
| Y-type zeolite | 9.0 Å (SiO₂/Al₂O₃=100) | - | - | - | - | - | - | - | - | - |
| Antioxidant | Irganox 1010 | 1 | 1 | 1 | 1 | 1 | 1 | 6 | 1 | 1 |
| Magnesium hydroxide | KISUMA 5A | 60 | 60 | 60 | 60 | 60 | 60 | 60 | 60 | 140 |
| Zeolite/Antioxidant | | 0.5 | 0.5 | 0.5 | 0.5 | 0.5 | 0.5 | 0.08 | 0.5 | 0.5 |
| Flame retardancy | | Good | Good | Good | Good | Good | Good | Good | Good | Good |
| Heat resistance | | Good | Good | Good | Good | Good | Good | Good | Good | Good |
| Moisture absorption | | Good | Good | Good | Good | Good | Good | Good | Good | Good |
| Bleeding | | Good | Good | Good | Good | Good | Good | Good | Good | Good |
| Hardness | | Good | Good | Good | Good | Good | Good | Good | Good | Poor |

**[Table 3]**

| | | Comparative Example 1 | Comparative Example 2 | Comparative Example 3 | Comparative Example 4 | Comparative Example 5 |
|---|---|---|---|---|---|---|
| Polyolefin | ENGAGE 7256 | 100 | 100 | 100 | 100 | 100 |
| A-type zeolite | 3 Å (SiO₂/Al₂O₃=2) | - | - | - | - | - |
| A-type zeolite | 4 Å (SiO₂/Al₂O₃=2) | - | - | - | - | - |
| A-type zeolite | 5 Å (SiO₂/Al₂O₃=2) | - | 4 | - | - | 0.5 |
| ZSM-5-type zeolite | 5.8 Å (SiO₂/Al₂O₃=40) | - | - | - | - | - |
| ZSM-5-type zeolite | 5.8 Å (SiO₂/Al₂O₃=1500) | - | - | 0.5 | 4 | - |
| Beta-type zeolite | 6.5 Å (SiO₂/Al₂O₃=40) | - | - | - | - | - |
| Y-type zeolite | 9.0 Å (SiO₂/Al₂O₃=5.5) | - | - | - | - | - |
| Y-type zeolite | 9.0 Å (SiO₂/Al₂O₃=100) | - | - | - | - | - |
| Antioxidant | Irganox 1010 | 1 | 1 | 7 | 1 | 1 |
| Magnesium hydroxide | KISUMA 5A | 60 | 60 | 60 | 60 | - |
| Zeolite/Antioxidant | | - | 4 | 0.07 | 4 | 0.5 |
| Flame retardancy | | Good | Good | Good | Good | Poor |
| Heat resistance | | Poor | Good | Good | Good | Good |
| Moisture absorption | | Good | Poor | Good | Poor | Good |
| Bleeding | | Good | Good | Poor | Good | Good |
| Hardness | | Good | Good | Good | Good | Good |

As shown in Table 1 and Table 2, the resin compositions according to Example 1 to Example 19 were excellent in flame retardancy, heat resistance, moisture absorption, and bleeding. Further, each of the resin compositions according to Example 1 to Example 18 contained the metal hydroxide in an amount of 130 parts by mass or less, and hence had a hardness higher than that of the resin composition according to Example 19, which contained the metal hydroxide in an amount of 140 parts by mass.

In contrast, as shown in Table 3, in the resin composition according to Comparative Example 1 that did not contain the zeolite, sufficient heat resistance was not obtained. Further, the resin composition according to Comparative Example 2 contained the zeolite in an amount of 4 parts by mass, and the mass ratio of the zeolite with respect to the antioxidant was 4. Thus, moisture absorption was evaluated as poor. Further, in the resin composition according to Comparative Example 3, the mass ratio of the zeolite with respect to the antioxidant was 0.07. Thus, bleeding was evaluated as poor. Further, similarly to Comparative Example 2, the resin composition according to Comparative Example 4 contained the zeolite in an amount of 4 parts by mass, and the mass ratio of the zeolite with respect to the antioxidant was 4. Thus, moisture absorption was evaluated as poor. Further, in the resin composition according to Comparative Example 5, magnesium hydroxide was not added, and hence flame retardancy was evaluated as poor.

All the contents in Japanese Patent Application No. 2023-213094 (filed on December 18, 2023) are herein incorporated by reference.

While some embodiments of the present invention are described above, those embodiments are merely examples, and are not intended to limit the scope of the invention. Those novel embodiments can be implemented in various other forms, and various omissions, substitutions, and changes can be made without departing from the gist of the invention. Those embodiments and modifications thereof are included within the scope and gist of the invention, and are also included within the scope of the invention described in the claims and equivalents thereof.

### REFERENCE SIGNS LIST

- 1: Coated electric wire
- 2: Conductor
- 3: Coating layer

## Claims

1. A resin composition comprising:
a polyolefin;
a zeolite;
an antioxidant; and
a metal hydroxide, wherein
the resin composition contains the zeolite in an amount of 0.1 parts by mass or more and 3.5 parts by mass or less with respect to 100 parts by mass of the polyolefin,
the resin composition contains the antioxidant in an amount of 1 parts by mass or more and 6.5 parts by mass or less with respect to 100 parts by mass of the polyolefin, and
a mass ratio of the zeolite with respect to the antioxidant is 0.08 or more and 3 or less.

2. The resin composition according to claim 1, wherein
the zeolite has a pore diameter of 6.5 Å or less.

3. The resin composition according to claim 1, wherein
the zeolite has a pore diameter of 6.6 Å or more and 9.0 Å or less, and a molar ratio of silica with respect to alumina in the zeolite is 10 or less.

4. The resin composition according to any one of claims 1 to 3, wherein
the polyolefin is crosslinked, and
the polyolefin contains at least one of polyethylene or an ethylene copolymer.

5. The resin composition according to any one of claims 1 to 4, wherein
the metal hydroxide includes magnesium hydroxide, and
the resin composition contains the metal hydroxide in an amount of 40 parts by mass or more and 130 parts by mass or less with respect to 100 parts by mass of the polyolefin.

6. The resin composition according to any one of claims 1 to 5, wherein
the resin composition has a Shore D hardness of less than 45.

7. The resin composition according to any one of claims 1 to 6, wherein
the resin composition is substantially free of a bromine-based flame retardant.

8. A coated electric wire comprising:
a conductor; and
a coating layer that covers the conductor and is formed of the resin composition according to any one of claims 1 to 7.
